(19) Europäisches Patentamt
European Patent Office
Office européen des brevets

(11) **EP 3 325 836 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**14.12.2022   Patentblatt 2022/50**

(45) Hinweis auf die Patenterteilung:
**26.06.2019   Patentblatt 2019/26**

(21) Anmeldenummer: **16742160.1**

(22) Anmeldetag: **04.07.2016**

(51) Internationale Patentklassifikation (IPC):
**F16D 13/52** (2006.01)        **F16D 13/64** (2006.01)
**F16D 13/69** (2006.01)

(52) Gemeinsame Patentklassifikation (CPC):
**F16D 13/52; F16D 13/648; F16D 13/69**

(86) Internationale Anmeldenummer:
**PCT/DE2016/200306**

(87) Internationale Veröffentlichungsnummer:
**WO 2017/012619 (26.01.2017 Gazette 2017/04)**

(54) **LAMELLENANORDNUNG FÜR EINE MEHRSCHEIBENKUPPLUNG**

MULTI-DISK ARRANGEMENT FOR A MULTI-DISK CLUTCH

ENSEMBLE DE DISQUES POUR EMBRAYAGE À DISQUES MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2015   DE 102015213953**

(43) Veröffentlichungstag der Anmeldung:
**30.05.2018   Patentblatt 2018/22**

(73) Patentinhaber: **Schaeffler Technologies AG & Co. KG**
**91074 Herzogenaurach (DE)**

(72) Erfinder: **GULLASCH, Jens**
**76149 Karlsruhe (DE)**

(56) Entgegenhaltungen:
| | |
|---|---|
| DE-A1- 1 575 983 | DE-A1- 1 575 983 |
| DE-A1- 4 408 666 | DE-A1- 4 408 666 |
| DE-A1-102007 038 155 | DE-A1-102008 062 645 |
| DE-A1-102008 062 645 | DE-A1-102009 027 017 |
| DE-A1-102013 112 591 | DE-A1-102013 220 265 |
| DE-A1-102013 220 265 | DE-U- 1 859 447 |
| FR-A- 924 404 | US-A- 1 558 773 |
| US-A- 3 537 556 | US-A1- 2013 213 759 |

EP 3 325 836 B2

**Beschreibung**

Die Erfindung betrifft eine Lamellenanordnung für eine Mehrscheibenkupplung zum Kuppeln einer Antriebswelle eines Kraftfahrzeugmotors mit mindestens einer Getriebeeingangswelle eines Kraftfahrzeuggetriebes und ein Verfahren zum Zusammenbau der Lamellenanordnung.

Lamellenkupplungen, insbesondere auch Lamellen-Doppelkupplungen sind bekannt. In WO2002046632A1 wird beispielsweise ein Lamellenpaket in einem Innen- und Außenträger geführt. Eine derartige Ausführung führt jedoch im Betrieb ohne Öl zu unerwünschten Klappergeräuschen aufgrund der statisch unbestimmten Position der Stahllamellen im Träger. Des Weiteren muss bei einer Anwendung mit mehr oder weniger Lamellen, auch die Länge des Trägers abgeändert werden. Außerdem sorgt eine solche Ausführung noch nicht selbständig dafür, dass die Lamellen im geöffneten Zustand eine definierte Lage aufweisen, also ein Lüften der Kupplung ermöglichen. Hierfür müssen weitere Technologien herangezogen werden.

Aus dem Stand der Technik ist ferner ein selbsttragendes Lamellenpaket bekannt, welches keinen Träger besitzt und durch die Blattfederverbindung ein definiertes Lüftungsspiel garantieren kann. Dieses Lamellenpaket kann zwar die vorhergenannten Probleme lösen; allerdings sieht dieses Lamellenpaket kein Prinzip zur Anpresskraftverstärkung vor. Außerdem werden die Innenlamellen nicht in definiertem Abstand zueinander gehalten. Durch die beschriebene Weise die Innenlamellen zu stapeln, ergibt sich ein Reibkontakt in den Verbindungen der Innenlamellen, der abhängig von der Größe des momentan übertragenen Momentes die benötigten Einrückkräfte erhöht, da zunächst die Reibungskräfte in der Kontaktstelle überwunden werden müssen. Aus der Schrift DE102013220265A1 ist ebenso, wie aus der US 2013/0213759 A1 eine Lamellenanordnung für eine Mehrscheibenkupplung bekannt.

Es besteht ein ständiges Bedürfnis den Wirkungsgrad einer Mehrscheibenkupplung durch eine einfache und kostengünstige Lösung zu erhöhen.

Eine Aufgabe der Erfindung ist es, eine Lamellenanordnung für eine Mehrscheibenkupplung zu schaffen, sie ermöglicht, den Wirkungsgrad der Mehrscheibenkupplung durch eine einfache und kostengünstige Lösung zu erhöhen.

Die Lösung der Aufgabe erfolgt erfindungsgemäß durch eine Lamellenanordnung mit den Merkmalen des Anspruchs 1 sowie ein Verfahren zur Herstellung der Lamellenanordnung mit den Merkmalen des Anspruchs 9. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Lamellenanordnung für eine Mehrscheibenkupplung zum Kuppeln einer Antriebswelle eines Kraftfahrzeugmotors mit mindestens einer Getriebeeingangswelle eines Kraftfahrzeuggetriebes vorgesehen mit mehreren parallel zueinander angeordneten ringförmigen Innenlamellen, einer an einem Innenumfang der Innenlamelle angeordneten Innenverbindungseinrichtung zur Verbindung der Innenlamellen miteinander, mehreren parallel zu den Innenlamellen angeordneten ringförmigen Außenlamellen zur reibschlüssigen Verspressen der Innenlamellen, wobei eine Anzahl von n Außenlamellen und eine Anzahl von n-1 Innenlamellen vorgesehen sind und wobei die Innenlamellen und die Außenlamellen abwechselnd und relativ zueinander axial verlagerbar angeordnet sind, und einer an einem Außenumfang der Außenlamelle angeordnet Außenverbindungseinrichtung zur Verbindung der Außenlamellen miteinander. Weiterhin umfasst die Innenverbindungseinrichtung mehrere an den Innenlamellen befestigte Innenblattfedern und die Außenverbindungseinrichtung mehrere an den Außenlamellen befestigte Außenblattfedern.

Bei der erfindungsgemäßen Lamellenanordnung benötigt weder einen Innenträger noch einen Außenträger zur Übertragung des Antriebsmomentes auf die Getriebeeingangswelle. Das Antriebsmoment kann durch die Lamellenanordnung selbst auf die Getriebeseite übertragen werden. Die erfindungsgemäße Lamellenanordnung ist mit trägerlosen stapelbaren Außenlamellen und trägerlosen stapelbaren Innenlamellen versehen. Durch eine an dem Außenumfang der Außenlamelle angeordnete Außenverbindungseinrichtung kann jede Außenlamelle mit ihrer nächstgelegenen Außenlamelle verbunden werden. Durch eine an dem Innenumfang angeordnete Innenverbindungseinrichtung kann die Innenlamelle mit ihrer nächstgelegenen Innenlamelle verbunden werden. Die Außenverbindungseinrichtung sowie die Innenverbindungseinrichtung können zur Verbindung weiterer Außen- und Innenlamellen wiederholt eingesetzt werden, so dass sich der Montageprozess einer Lamellenanordnung mit n Lamellen zu demjenigen von n-1 Lamellen nur derart unterscheidet, dass ein Montageschritt einmal öfter ausgeführt werden muss, jedoch kein weiteres Werkzeug oder weiteres von den bisher verwendeten Teilen verschiedenes Teil verwendet werden muss. Dadurch soll das Problem klappernder Lamellen im trockenen Betrieb bei gleichzeitig geringem Kosten- und Montageaufwand gelöst werden. Sowohl die Verbindung der Innenlamellen miteinander als auch die Verbindung der Außenlamellen miteinander sind so ausgeführt, dass sie im Zugbetrieb eine Anpresskraftverstärkung hervorrufen, sodass schon bei Anwendungen mit vergleichsweise wenig Lamellen ein nennenswerter Verstärkungseffekt erzielt werden kann. Dadurch kann die zum Schließen benötigte Anpresskraft mit Hilfe des übertragenen Moments herabgesetzt werden, wodurch kleinere, energiesparendere und günstigere Aktoren eingesetzt werden können.

Die Außen- und Innenverbindungseinrichtungen der erfindungsgemäßen Lamellenanordnung können derart ausgeführt werden, dass bei Verwendung der Lamellenanordnung in einer schaltbaren Kupplung, sowohl die Innenlamellen als auch die Außenlamellen auch im ausgerückten Zustand stets eine definierte Lage vorweisen. Somit kann die Kupplung besser lüften und das Schleppmoment reduziert werden, wodurch der Wirkungsgrad erhöht werden kann.

Insbesondere kann die Innenlamelle mit Reibbelägen zur reibschlüssigen Übertragung des Drehmomentes versehen sein, wobei die Reibbeläge auf beiden Seiten der Innenlamelle angeordnet sein können. Somit besitzen die Innenlamellen je zwei Reibflächen, mit denen sie an ihren Nachbarbauteilen, wie z.B. Außenlamelle anliegen, wenn sie zur Momentenübertragung von der Kupplung eingespannt werden, und bilden so mit einer Innenlamelle zwei Reibstellen aus. Das übertragbare Moment einer Kupplung lässt sich bei gleicher Anpresskraft, gleichem Durchmesser und gleichen Reibverhältnissen (Reibwert) steigern, indem man die Anzahl der Reibstellen erhöht.

Vorteilhaft kann die Innenlamelle selber aus einem Reibmaterial ausgebildet sein. Anstatt den Reibbelag an der Innenlamelle anzubringen, ist es weiterhin im Sinne der Erfindung, die Innenlamellen direkt aus hochfestem Material, wie z.B. Carbon in der geometrischen Form der Innenlamelle zu fertigen. Dadurch können ein zusätzlicher Träger zum Tragen der Reibbeläge und die Befestigungen der Reibbeläge an dem Träger eingespart werden, wodurch die Herstellungskosten reduziert werden kann.

Vorzugsweise kann die Innenverbindungseinrichtung mehrere Innenverbindungsstellen zur Verbindung von den Innenblattfedern der nächstgelegenen Innenlamelle umfassen. Zur Verbindung mit den nächstgelegenen Innenlamellen kann jede Innenlamelle an ihrem Innenumfang mehrere Innenblattfedern und mehrere Innenverbindungsstellen zur Verbindung von den Innenblattfedern der nächstgelegenen Innenlamelle versehen sein. Die Anzahl der Innenblattfedern von einer Innenlamelle entspricht der Anzahl der Verbindungsstellen der nächstgelegenen Innenlamelle. Die Befestigung der Innenblattfeder an der entsprechenden Innenverbindungsstelle kann beispielsweise durch Verschrauben, Vernieten oder Verschweißen erfolgen.

Insbesondere können die Innenblattfedern der Innenverbindungseinrichtung im Wesentlichen identisch zueinander ausgebildet und in Umfangsrichtung der Innenlamelle gleichmäßig verteilt sind. Durch die identische Ausbildung und die gleichmäßige Verteilung der Innenblattfedern kann beispielsweise ungleichmäßige Bauteilbelastungen vermieden werden.

In vorteilhafter Weiterbildung der Erfindung ist vorgesehen, dass die Innenverbindungseinrichtung einteilig mit der Innenlamelle ausgebildet sein kann. Dadurch kann eine zusätzliche Befestigung der Innenverbindungseinrichtung an der Innenlamelle eingespart werden, wodurch die Herstellung kostengünstiger erfolgen kann. Beispielsweise können die Innenblattfedern und die Innenverbindungsstellen direkt aus der Innenlamelle ausgeformt werden. Die Innenverbindungsstellen können jeweils an einem in Radialrichtung der Innenlamelle nach Innen herausragenden Innenvorsprung angeordnet sein. Die Innenblattfeder kann mit einem freien Ende versehen sein und derart aus der Innenlamelle ausgeformt werden, dass das freie Ende der Innenblattfeder im Wesentlichen in Richtung der Innenverbindungsstelle zeigt, wobei diese Innenverbindungsstelle vorzugsweise nicht von der Innenblattfeder überdeckt werden soll, sodass sowohl diese Innenverbindungsstelle als auch das freie Ende der Innenblattfeder bei Montage vom Werkzeug immer erreicht werden können. Die Innenlamelle mit der Innenblattfedern und der Innenverbindungsstellen kann beispielsweise einteilig ausgestanzt werden. Die Innenblattfedern können zur Verbindung mit den nächstgelegenen Innenlamellen leicht verformt werden. Die Verformung der Innenblattfedern kann durch einen Umformprozess erfolgen.

In vorteilhafter Weiterbildung der Erfindung ist ferner vorgesehen, dass die Außenverbindungseinrichtung mehrere erste Außenverbindungsstellen und zweite Außenverbindungsstellen zur Verbindung von den Außenblattfedern aufweisen kann. Beispielsweise können die Außenblattfedern separat zu der Außenlamelle ausgebildet sein. Jede Außenblattfeder kann mit einem ersten Ende zur Verbindung an der ersten Außenverbindungsstelle einer ersten Außenlamelle und einem zweiten Ende zur Verbindung an der zweiten Außenverbindungsstelle einer der ersten Außenlamelle nächstgelegenen zweiten Außenlamelle versehen. Vorteilhaft kann das erste Ende der Außenblattfeder an einer ersten Verbindungsseite der ersten Außenverbindungsstelle der ersten Außenlamelle befestigt sein. Das zweite Ende dieser Außenblattfeder kann an einer der ersten Verbindungsseite abgewandten zweiten Verbindungsseite der zweiten Außenverbindungsstelle der zweiten Außenlamelle befestigt sein, sodass ein möglichst großer Aufstellwinkel der Außenblattfedern und somit ein maximaler Verstärkungseffekt erzielt werden kann. Die Außenblattfedern können dabei so angeordnet werden, dass diese beim Betrieb der Lamellenanordnung im Zugbetrieb auf Zug belastet werden. Die Befestigung der Außenblattfeder sowohl an der ersten Außenverbindungsstelle als auch an der zweiten Außenverbindungsstelle kann durch Verschrauben, Vernieten oder Verschweißen durchgeführt werden. Dieses Verbindungsprinzip kann wiederholt eingesetzt werden, bis die gewünschte Anzahl der Außenlamellen erreicht ist. Zum Vereinfachen der Verbindungen von den Außenlamellen kann beispielsweise das erste Ende der Außenblattfeder vor dem Verbindungsvorgang an der ersten Außenverbindungsstelle einer Außenlamelle vormontiert werden. Die Länge der Außenblattfeder soll derart vorbestimmt werden, dass ihr freistehendes zweites Ende nach der Vormontage des ersten Endes an der ersten Außenstelle einer Außenlamelle nicht von den anderen Außenverbindungsstellen dieser Außenlamelle überdeckt wird, wodurch dieses freistehende zweite Ende der Außenblattfeder in weiteren Montageschritten vom Werkzeug erreicht werden kann.

Vorteilhaft können die Außenblattfedern der Außenverbindungseinrichtung im Wesentlichen identisch zueinander ausgebildet und in Umfangsrichtung der Außenlamelle gleichmäßig verteilt befestigt sein. Durch die identische Ausbildung und die gleichmäßige Verteilung der Außenblattfedern kann beispielsweise ungleichmäßige Bauteilbelastungen vermieden werden.

Ferner betrifft die Erfindung ein Verfahren zum Zusammenbau einer Lamellenanordnung, bei dem mehrere Innenlamellen bereitgestellt werden, die mit Innenblattfedern und Innenverbindungsstellen versehen sind, mehrere Außenlamellen bereitgestellt werden, die mit ersten Außenverbindungsstellen und zweiten Außenverbindungsstellen versehen sind, wobei eine Anzahl von n Außenlamellen und eine Anzahl von n-1 Innenlamellen vorgesehen sind, mehrere Außenblattfedern bereitgestellt werden, die Außenblattfedern an den entsprechenden ersten Außenverbindungsstellen der Außenlamellen vormontiert werden, die i-te Innenlamelle auf der i-ten Außenlamelle aufgelegt wird, wobei i ganzzahlig ist und $1 \leq i \leq n-2$, die (i+1)-te Außenlamelle auf der i-ten Innenlamelle aufgelegt wird, die an der i-ten Außenlamelle vormontierten Außenblattfedern an den entsprechenden zweiten Außenverbindungsstellen der (i+1)-ten Außenlamelle befestigt werden, die (i+1)-te Innenlamelle auf der(i+1)-ten Außenlamelle aufgelegt wird, die Innenblattfedern der i-ten Innenlamelle an den entsprechenden Innenverbindungsstellen der (i+1)-ten Innenlamelle befestigt werden, die (i+2)-te Außenlamelle auf der (i+1)-ten Innenlamelle aufgelegt wird, und
die an der (i+1)-ten Außenlamelle vormontierten Außenblattfedern an den entsprechenden zweiten Außenverbindungsstellen der (i+2)-ten Außenlamelle befestigt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

Fig. 1: eine perspektivische Gesamtansicht einer Lamellenanordnung gemäß einer Ausführungsform der Erfindung,

Fig. 2: eine Draufsicht einer Außenlamelle der Lamellenanordnung aus Fig. 1,

Fig. 3: eine perspektivische Ansicht einer Außenlamelle der Lamellenanordnung aus Fig. 1 mit Außenverbindungseinrichtungen,

Fig. 4: eine vergrößerte perspektivische Darstellung des Zusammenbaus von zwei Außenlamellen durch eine Außenverbindungseinrichtung,

Fig. 5: eine vergrößerte perspektivische Darstellung des Zusammenbaus von drei Außenlamellen durch die Außenverbindungseinrichtungen,

Fig. 6: eine perspektivische Ansicht einer Innenlamelle der Lamellenanordnung aus Fig. 1,

Fig. 7: eine perspektivische Darstellung des Zusammenbaus von zwei Innenlamellen aus Fig. 6,

Fig. 8: eine perspektivische Darstellung des Zusammenbaus von drei Innenlamellen aus Fig. 6,

Fig. 9: eine perspektivische Darstellung des Zusammenbaus von vier Innenlamellen aus Fig. 6, wobei eine der Innenlamellen mit einer Nabe verbunden ist,

Fig. 10: eine prinzipielle Darstellung einer Anpressverstärkung aus der Verbindung der Außenlamellen,

Fig. 11: eine prinzipielle Darstellung einer Anpressverstärkung aus der Verbindung der Innenlamellen und

Fig. 12: eine prinzipielle Darstellung von Berechnung einer maximalen Anzahl der Außenlamellen.

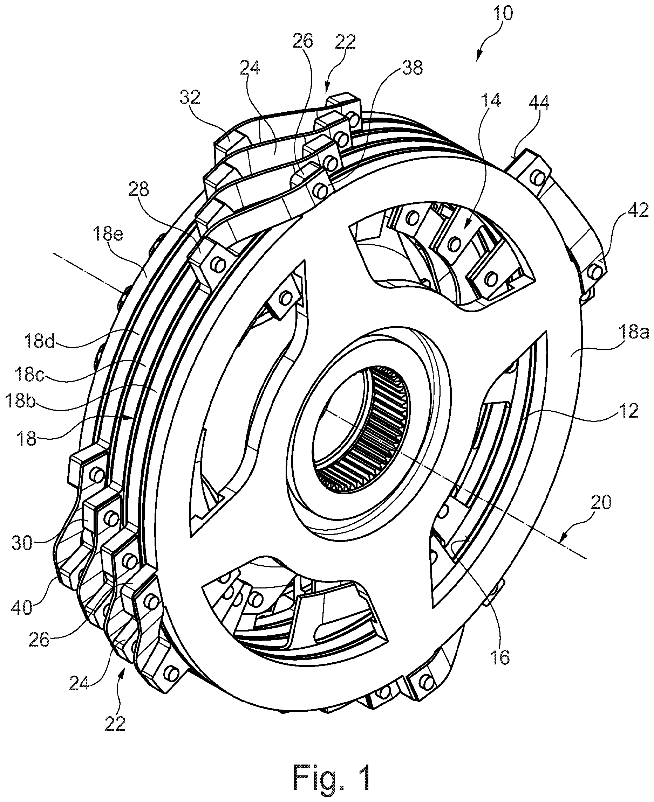

Fig. 1 zeigt eine perspektivische Gesamtansicht einer Lamellenanordnung 10 gemäß einer Ausführungsform der Erfindung. In diesem Ausführungsbeispiel ist die Lamellenanordnung 10 mit vier parallel zueinander angeordneten ringförmigen Innenlamellen 12 versehen. Zur Verbindung der Innenlamellen 12 miteinander weist die Lamellenanordnung 10 eine Innenverbindungseinrichtung 14 auf, die an einem Innenumfang 16 der Innenlamelle 12 angeordnet ist. Wie in Fig. 1 gezeigt weist die Lamellenanordnung 10 ferner fünf parallel zu den Innenlamellen 12 angeordneten ringförmigen Außenlamellen 18 zur reibschlüssigen Verspressen der Innenlamellen 12 auf. Die Innenlamellen 12 und die Außenlamellen 18 sind abwechselnd und relativ zueinander axial verlagerbar angeordnet und mit derselben Drehachse 20 versehen. Zur Verbindung der Außenlamellen 18 miteinander weist die Lamellenanordnung 10 eine Außenverbindungseinrichtung 22 auf, die an einem Außenumfang 24 der Außenlamelle 18 angeordnet ist. In diesem Ausführungsbeispiel weist die Außenverbindungseinrichtung 22 mehrere separat zu der Außenlamelle 18 ausgebildete Außenblattfedern 24 sowie mehrere erste Außenverbindungsstellen 26 und zweite Außenverbindungsstellen 28 auf. Wie in Fig. 1 gezeigt weisen die Außenlamellen 18a - 18d jeweils vier in Umfangsrichtung gleichmäßig verteilte erste Außenverbindungsstellen 26 auf. In diesem Ausführungsbeispiel sind die ersten Außenverbindungsstellen 26 jeweils an einem in Radialrichtung nach Außen herausragenden ersten Außenvorsprung 30 angeordnet, wobei die ersten Außenvorsprünge 30 im Wesentlichen identisch zueinander ausgebildet sind. Die Außenlamellen 18b - 18e sind jeweils mit vier in Umfangsrichtung gleichmäßig verteilte zweite Außenverbindungsstellen 28 auf. In diesem Ausführungsbeispiel sind die zweiten Außenverbindungsstellen 28 jeweils an einem in Radialrichtung nach Außen herausragenden zweiten Außenvorsprung 32 angeordnet, wobei die zweiten Außenvorsprünge 32 im Wesentlichen identisch zueinander ausgebildet sind. Die Außenlamellen 18b - 18d sind jeweils mit vier Paaren von Außenverbindungsstellen 34 versehen, wobei jedes Paar von Außenverbindungsstellen 34 eine erste Außenverbindungsstelle 26 und eine von dieser ersten Außenverbindungsstelle 26 beabstandete zweite Außenverbindungsstelle 28 umfasst.

An jeder Außenverbindungsstelle 26, 28 ist eine Bohrung 36 zur Verschraubung oder Vernietung mit der Außenblattfeder 24 vorgesehen. Wie in Fig. 1 gezeigt ist jede Außenblattfeder 24 mit einem ersten Ende 38 zur Verbindung an der ersten Außenverbindungsstelle 26 einer Außenlamelle 18 und einem zweiten Ende 40 zur Verbindung an der zweiten Außenverbindungsstelle 28 einer dieser Außenlamelle 18 nächstgelegenen anderen Außenlamelle 18 versehen. Die Verbindungen der fünf Außenlamellen 18 sind mit im Wesentlichen gleichem Prinzip hergestellt, sodass hier nur eine Verbindung der ersten Außenlamelle 18a mit der zweiten Außenlamelle 18b als Beispiel erläutert wird. Wie in Fig. 1 gezeigt ist das erste Ende 38 der Außenblattfeder 24 an einer ersten Verbindungsseite 42 der ersten Außenverbindungsstelle 26 der ersten Außenlamelle 18a befestigt. Das zweite Ende 40 dieser Außenblattfeder 26 ist an der nächstgelegenen zweiten Außenverbindungsstelle 28 der zweiten Außenlamelle 18b befestigt, wobei das zweite Ende 40 dieser Außenblattfeder 24 an einer der ersten Verbindungsseite 42 abgewandten zweiten Verbindungsseite 44 der zweiten Außenverbindungsstelle 28 befestigt ist, sodass ein möglichst großer Aufstellwinkel der Außenblattfedern 24 und somit ein maximaler Verstärkungseffekt erzielt werden kann. Die Befestigung der Außenblattfeder 24 sowohl an der ersten Außenverbindungsstelle 28 als auch an der zweiten Außenverbindungsstelle 28 kann durch Verschrauben, Vernieten oder Verschweißen durchgeführt werden.

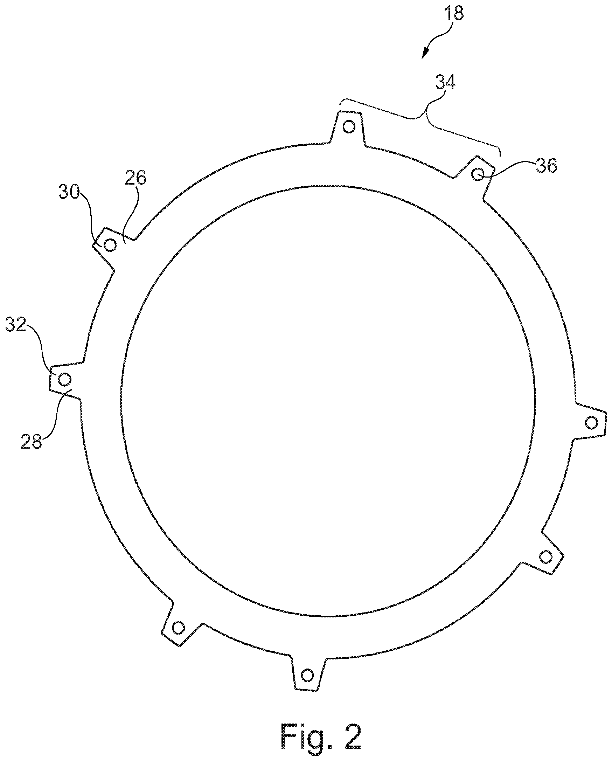

Fig. 2 zeigt eine Draufsicht einer der Außenlamellen 18b - 18d der Lamellenanordnung 10 aus Fig. 1. Wie aus Fig. 2 ersichtlich ist, weist die Außenlamellen 18b - 18d jeweils vier Paare von Außenverbindungsstellen 34 auf. Die vier Paare von Außenverbindungsstellen 34 sind im Wesentlichen identisch ausgebildet und in Umfangsrichtung gleichmäßig verteilt angeordnet. Jedes Paar von Außenverbindungsstellen 34 weist eine erste Außenverbindungsstelle 26 und eine von dieser ersten Außenverbindungsstelle 26 beabstandete zweite Außenverbindungsstelle 28 auf, wobei an jeder Außenverbindungsstelle 26, 28 ist eine Bohrung 36 zur Verschraubung oder Vernietung mit der Außenblattfeder 24 vorgesehen. Es ist ebenfalls möglich, dass die Außenlamelle 18 mit drei oder mehr als vier Paaren von Außenverbindungsstellen 34 versehen ist.

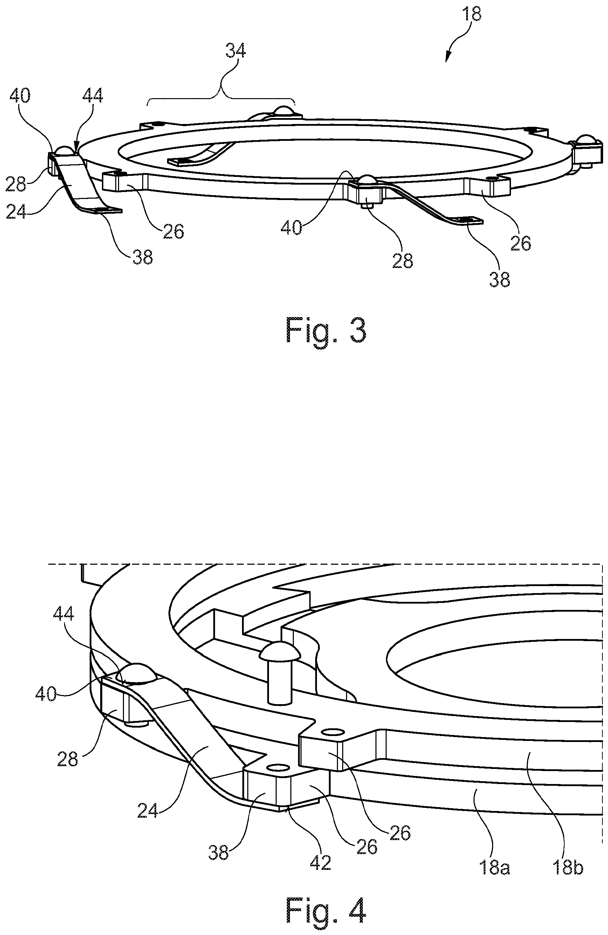

Fig. 3 zeigt eine perspektivische Ansicht einer vormontierten Außenlamelle 18 mit Außenblattfeder 24. Vor einem Zusammenbau der Lamellenanordnung 10 kann die Außenblattfeder 24 vormontiert werden. Bei der Vormontage kann beispielsweise die Außenblattfeder 24 mit ihrem zweiten Ende 40 an einer zweiten Außenverbindungsstelle 28 eines Paares von Außenverbindungsstellen 34 derart befestigt werden, dass das erste Ende 38 der Außenblattfeder 24 im Wesentlichen in Richtung der ersten Außenverbindungsstelle 26 desselben Paares von Außenverbindungsstellen 34 zeigt. Diese erste Außenverbindungsstelle 26 soll vorzugsweise nicht von der vormontierten Außenblattfeder 24 überdeckt werden, wodurch sowohl diese erste Außenverbindungsstelle 26 als auch das erste Ende 38 der Außenblattfeder 24 in weiteren Montageschritten vom Werkzeug immer erreicht werden können.

Fig. 4 zeigt eine vergrößerte perspektivische Darstellung des Zusammenbaus von zwei Außenlamellen 18 durch eine Außenblattfeder 24. In diesem Ausführungsbeispiel ist der erste Montageschritt zum Montieren der ersten Außenlamelle 18a mit der zweiten Außenlamelle 18b dargestellt. Bei dieser Montage wird zunächst die erste Außenlamelle 18a in einen Montageträger (nicht dargestellt) gelegt. Auf der ersten Außenlamelle 18a wird die erste Innenlamelle 12a aufgelegt, welche in Fig.4 der Übersichtlichkeit wegen nicht enthalten ist. Danach wird die zweite Außenlamelle 18b auf dieser Innenlamelle 12a angeordnet, wobei die zweite Außenlamelle 18b, wie in Fig. 3 gezeigt, mit den Außenblattfedern 24 vormontiert ist. Das freistehende erste Ende 38 der Außenblattfeder 24 wird an der entsprechenden ersten Verbindungsseite 42 der ersten Außenverbindungsstelle 26 der ersten Außenlamelle 18a befestigt. In diesem Ausführungsbeispiel erfolgt die Befestigung durch Vernieten. Die Länge der Außenblattfeder 24 ist derart vorbestimmt, dass ihr erstes Ende 38 von der zweiten Außenverbindungsstelle 28 der zweiten Außenlamelle 18b nicht überlagert ist, wodurch das erste Ende 38 der Außenblattfeder 24 beim Vernieten vom Werkzeug erreicht werden kann.

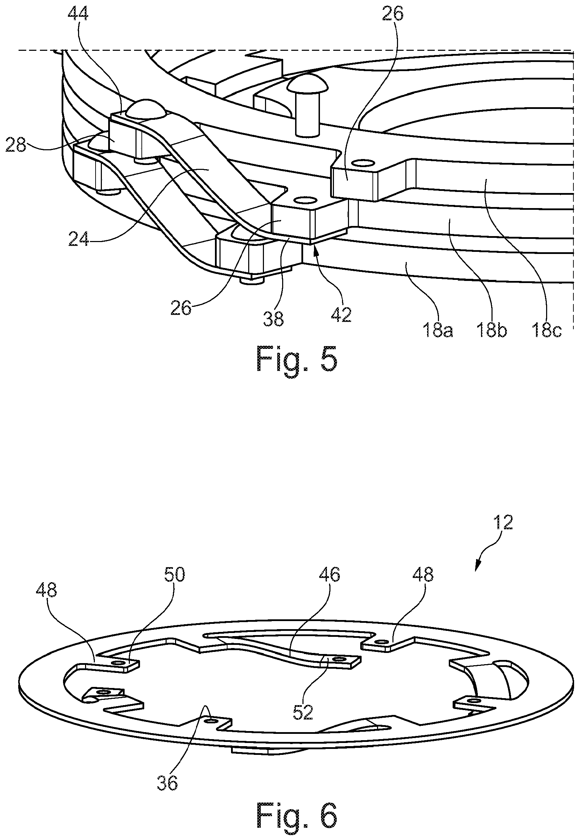

Fig. 5 zeigt eine vergrößerte perspektivische Darstellung des Zusammenbaus von drei Außenlamellen 18 durch eine Außenblattfeder 24. Nach dem ersten Montageschritt, der in Fig. 4 dargestellt ist, wird bei dem zweiten Montageschritt das dritte Außenlamelle 18c montiert. Bei dieser Montage wird zunächst auf der zweiten Außenlamelle 18b die zweite Innenlamelle 12b aufgelegt, welche in Fig.5 der Übersichtlichkeit wegen nicht enthalten ist. Danach wird die dritte Außenlamelle 18c auf dieser Innenlamelle 12b angeordnet, wobei die dritte Außenlamelle 18c, wie in Fig. 3 gezeigt, mit den Außenblattfedern 24 vormontiert ist. Das freistehende erste Ende 38 der Außenblattfeder 24 wird an der entsprechenden ersten Verbindungsseite 42 der ersten Außenverbindungsstelle 26 der zweiten Außenlamelle 18b befestigt. In diesem Ausführungsbeispiel erfolgt die Befestigung durch Vernieten. Die Länge der Außenblattfeder 24 ist derart vorbestimmt, dass ihr erstes Ende 38 von der ersten Außenverbindungsstelle 26 der dritten Außenlamelle 18c nicht überlagert ist, wodurch das erste Ende 38 der Außenblattfeder 24 beim Vernieten vom Werkzeug erreicht werden kann. Dieser Montagevorgang kann wiederholt durchgeführt werden, bis die gewünschte Anzahl der Außenlamellen 18 erreicht ist.

Fig. 6 zeigt eine perspektivische Ansicht einer Innenlamelle 12 der Lamellenanordnung 10 aus Fig. 1. Zur Verbindung mit den nächstgelegenen Innenlamellen 12 weist jede Innenlamelle 12 an ihrem Innenumfang 16 eine Innenverbindungeinrichtung 14 auf. In diesem Ausführungsbeispiel ist die Innenverbindungseinrichtung 14 mit vier aus der Innenlamelle 12 ausgeformten Innenblattfedern 46 und vier Innenverbindungsstellen 48 zur Verbindung von den Innenblattfedern 46 der nächstgelegenen Innenlamelle 12 versehen. In diesem Ausführungsbeispiel sind die vier Innenverbindungsstellen 12 jeweils an einem in Radialrichtung nach Innen herausragenden Innenvorsprung 50 angeordnet, wobei die Innenvorsprünge 50 im Wesentlichen identisch zueinander ausgebildet und in Umfangsrichtung gleichmäßig verteilt sind. Wie in Fig. 6 gezeigt ist die Innenblattfeder 46 mit einem freien Ende 52 versehen und derart angeordnet, dass das freie Ende 52 der Innenblattfeder 46 im Wesentlichen in Richtung der Innenverbindungsstelle 48 zeigt, wobei diese Innenverbindungsstelle 48 vorzugsweise nicht von der Innenblattfeder 46 überdeckt werden soll, wodurch sowohl diese Innenverbindungsstelle 48 als auch das freie Ende 52 der Innenblattfeder 46 bei Montage vom Werkzeug immer erreicht werden können. Die vier Innenblattfedern 46 sind im Wesentlichen identisch zueinander ausgebildet und in Umfangsrichtung gleichmäßig verteilt.

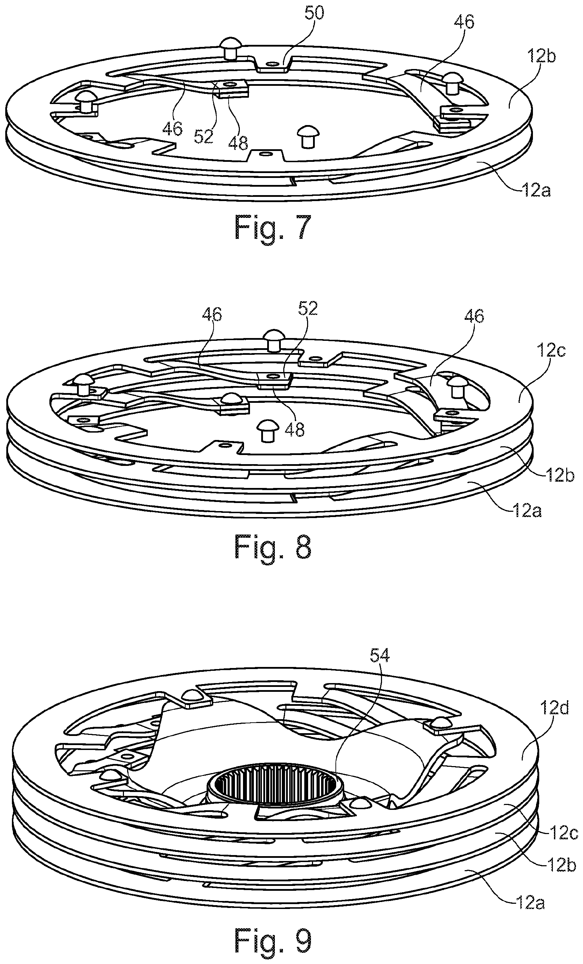

Fig. 7 zeigt eine perspektivische Darstellung des Zusammenbaus von zwei Innenlamellen 12. In diesem Ausführungsbeispiel ist ein Montageschritt zum Montieren der ersten Innenlamelle 12a mit der zweiten Innenlamelle 12b dargestellt. Bei dieser Montage wird zunächst die erste Innenlamelle 12a auf der ersten Außenlamelle 18a (nicht in Fig. 7 dargestellt) gelegt. Auf der ersten Innenlamelle 12a wird dann die zweite Außenlamelle 18b aufgelegt, welche in Fig.7 der Übersichtlichkeit wegen nicht enthalten ist. Danach wird die zweite Innenlamelle 12b auf dieser Außenlamelle 18b angeordnet, wobei die zweite Innenlamelle 12b, wie in Fig. 6 gezeigt, mit den Innenblattfedern 46 versehen ist. Das freie Ende 52 der Innenblattfeder 46 der zweiten Innenlamelle 12b wird an der entsprechenden Innenverbindungsstelle 48 der ersten Innenlamelle 12a befestigt. In diesem Ausführungsbeispiel erfolgt die Befestigung durch Vernieten. Die Länge der Innenblattfeder 46 ist derart vorbestimmt, dass ihr freies Ende 52 von der Innenverbindungsstelle 48 der zweiten Innenlamelle 12b nicht überlagert ist, wodurch das freie Ende 52 der Innenblattfeder 46 beim Vernieten an der Innenverbindungsstelle 48 der ersten Innenlamelle 12a vom Werkzeug erreicht werden kann.

Fig. 8 zeigt eine perspektivische Darstellung des Zusammenbaus von drei Innenlamellen 12. Nach dem Montageschritt, der in Fig. 7 dargestellt ist, wird das dritte Innenlamelle 12c montiert. Bei dieser Montage wird zunächst auf der zweiten Innenlamelle 12b die dritte Außenlamelle 18c aufgelegt, welche in Fig. 8 der Übersichtlichkeit wegen nicht enthalten ist. Danach wird die dritte Innenlamelle 12c auf dieser Außenlamelle 18c angeordnet, wobei die dritte Innenlamelle 12c, wie in Fig. 6 gezeigt, mit den Innenblattfedern 46 versehen ist. Das freie Ende 52 der Innenblattfeder 46 der dritten Innenlamelle 12c wird an der entsprechenden Innenverbindungsstelle 48 der zweiten Innenlamelle 12b befestigt. In diesem Ausführungsbeispiel erfolgt die Befestigung durch Vernieten. Die Länge der Innenblattfeder 46 ist derart vorbestimmt, dass ihr freies Ende 52 von der Innenverbindungsstelle 48 der dritten Innenlamelle 12c nicht überlagert ist, wodurch das freie Ende 52 der Innenblattfeder 46 beim Vernieten an der Innenverbindungsstelle 48 der zweiten Innenlamelle 12b vom Werkzeug erreicht werden kann. Dieser Montagevorgang kann wiederholt durchgeführt werden, bis die gewünschte Anzahl der Außenlamellen 18 erreicht ist.

Fig. 9 zeigt eine perspektivische Darstellung des Zusammenbaus von vier Innenlamellen 12. Das Verbindungsprinzip von den Innenlamellen 12 ist entsprechend in Fign. 7 und 8 erläutert. Wie in Fig. 9 gezeigt ist eine Nabe 54 zur Verbindung mit einer Getriebeeingangswelle an der vierten (letzten) Innenlamelle 12d befestigt. Um den Verstärkungseffekt sicherzustellen, ist es zwingend die Nabe 54 an der letzten 12d oder der ersten Innenlamelle 12a zu montieren.

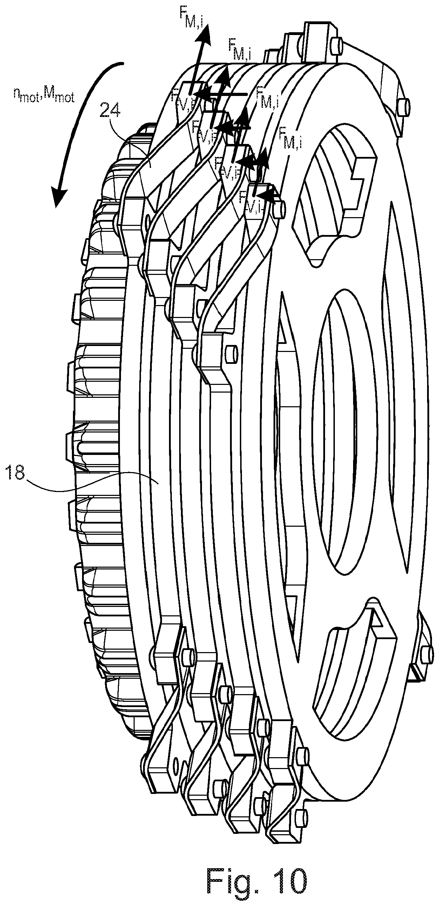

Fig. 10 zeigt eine prinzipielle Darstellung einer Anpressverstärkung aus der Verbindung der Außenlamellen 18. Das in einer Außenlamelle 18 übertragene Moment wird über die Außenblattfedern 24 an die nächste Außenlamelle 18 weitergegeben. Dabei sind die Außenblattfedern 24 gezielt derart vorgesehen, dass sie im Zugbetrieb auf Zug belastet sind, und somit ein gefährliches Ausknicken unmöglich ist. Bedingt durch den Aufstellwinkel der Außenblattfeder 24, ergibt sich durch die Zugbelastung eine anpresskraftverstärkende Axialkraft $F_{V,i}$. Die Zugbelastung $F_{M,i}$ der i-ten Außenlamelle 18 ist abhängig vom in ihr übertragenen Moment. Die sich in jeder Außenlamelle 18 ergebende Axialkraft $F_{V,i}$ kaskadiert sich, da jede weitere Außenlamelle 18 zusätzlich durch das Moment aller vorigen Außenlamellen 18 belastet wird.

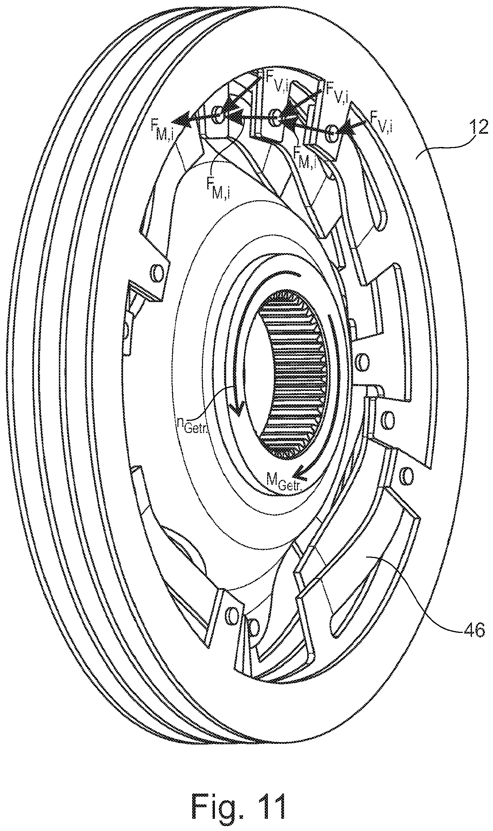

Fig. 11 zeigt eine prinzipielle Darstellung einer Anpressverstärkung aus der Verbindung der Innenlamellen 12. Das Prinzip ist dasselbe, wie bei den Außenlamellen 18. Auch hier wird das Moment von einer Innenlamelle 12 zu der nächsten übertragen, wobei auch hier die Innenblattfedern 46 explizit im Zugbetrieb auf Zug belastet werden. Wiederum über den Aufstellwinkel ergibt sich in jeder Innenlamelle 12 eine die Anpresskraft verstärkende Axialkraft $F_{V,i}$. Insgesamt zieht sich quasi die Lamellenanordnung 10 durch das übertragene Moment wie ein Schlingband zu.

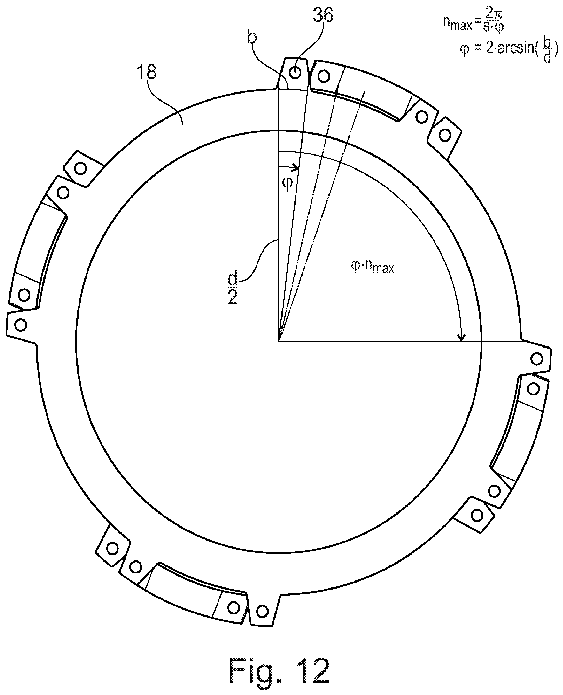

Fig. 12 zeigt eine prinzipielle Darstellung von Berechnung einer maximalen Anzahl der Außenlamellen 18. Die konkrete maximale Anzahl von Außenlamellen 18 kann durch die Formel:

$$n_{max} = \left\lfloor \frac{\pi}{s \cdot arcsin(b/d)} \right\rfloor,$$

berechnet werden, wobei s die Anzahl der symmetrisch verteilten Paare von Außenverbindungsstellen 34 pro Außenlamelle 18 bezeichnet. In der in Fig. 12 gezeigte Ausführungsform s=4. Der Buchstabe b bezeichnet die Breite des Außenvorsprungs 30, 32 und die Formel d/2 bezeichnet den Abstand von dem Mittelpunkt der Außenlamelle 18 zu der Bohrung 36 einer Außenverbindungsstelle 26, 28.

Für die Innenlamellen 12 ergibt sich die gleiche Formel. In der Regel fällt die maximale Anzahl hier also geringer aus, da bei sonst gleichen Größen s und b, der Abstand d/2 von dem Mittelpunkt der Innenlamelle 12 zu der Bohrung 36 einer Innenverbindungsstelle 48 geringer ist.

### Bezugszeichenliste

10     Lamellenanordnung
12     Innenlamelle
14     Innenverbindungeinrichtung
16     Innenumfang der Innenlamelle
18     Außenlamelle
20     Drehachse
22     Außenverbindungseinrichtung
24     Außenblattfeder
26     erste Außenverbindungsstelle
28     zweite Außenverbindungsstelle
30     erster Außenvorsprung
32     zweiter Außenvorsprung
34     Paar von Außenverbindungsstellen
36     Bohrung
38     erstes Ende
40     zweites Ende
42     erste Verbindungsseite der ersten Außenverbindungsstelle
44     zweite Verbindungsseite der zweiten Außenverbindungsstelle
46     Innenblattfeder
48     Innenverbindungsstelle
50     Innenvorsprung
52     freies Ende der Innenverbindungsfeder
54     Nabe

### Patentansprüche

1. Lamellenanordnung für eine Mehrscheibenkupplung zum Kuppeln einer Antriebswelle eines Kraftfahrzeugmotors mit mindestens einer Getriebeeingangswelle eines Kraftfahrzeuggetriebes mit

   mehreren parallel zueinander angeordneten ringförmigen Innenlamellen (12), einer an einem Innenumfang (16) der Innenlamelle (12) angeordneten Innenverbindungseinrichtung (14) zur Verbindung der Innenlamellen (12) miteinander, mehreren parallel zu den Innenlamellen (12) angeordneten ringförmigen Außenlamellen (18) zur reibschlüssigen Verspressen der Innenlamellen (12) und, wobei die Innenlamellen (12) und die Außenlamellen (18) abwechselnd und relativ zueinander axial verlagerbar angeordnet sind, und
   einer an einem Außenumfang der Außenlamelle (18) angeordnet Außenverbindungseinrichtung (22) zur Verbindung der Außenlamellen (18) miteinander,
   **dadurch gekennzeichnet, dass** die Innenverbindungseinrichtung mehrere an den Innenlamellen (12) befestigte Innenblattfedern (46) umfasst,
   die Außenverbindungseinrichtung (22) mehrere an den Außenlamellen (18) befestigte Außenblattfedern (24) umfasst, wobei
   das in einer Außenlamelle (18) übertragene Moment über die Außenblattfedern (24) an die nächste Außenlamelle (18) weitergegeben wird, und
   das in einer Innenlamelle (12) übertragene Moment über die Innenblattfedern (46) an die nächste Innenlamelle (12) weitergegeben wird.

2. Lamellenanordnung nach Anspruch 1, **dadurch gekennzeichnet, dass** die Innenlamelle (12) mit Reibbelägen zur reibschlüssigen Übertragung des Drehmomentes versehen ist, wobei die Reibbeläge auf beiden Seiten der Innenlamelle (12) angeordnet sind.

3. Lamellenanordnung nach Anspruch 1, **dadurch gekennzeichnet, dass** die Innenlamelle (12) selber aus einem Reibmaterial ausgebildet ist.

4. Lamellenanordnung nach einem der Ansprüche 1 bis 3, **dadurch gekennzeichnet, dass** die Innenverbindungseinrichtung (14) mehrere Innenverbindungsstellen (48) zur Verbindung von den Innenblattfedern (46) der nächstgelegenen Innenlamelle (12) umfasst.

5. Lamellenanordnung nach Anspruch 4, **dadurch gekennzeichnet, dass** die Innenblattfedern (46) der Innenverbindungseinrichtung (14) im Wesentlichen identisch zueinander ausgebildet und in Umfangsrichtung der Innenlamelle (12) gleichmäßig verteilt sind.

6. Lamellenanordnung nach einem der Ansprüche 1 bis 5, **dadurch gekennzeichnet, dass** die Innenverbindungseinrichtung (14) einteilig mit der Innenlamelle (12) ausgebildet ist.

7. Lamellenanordnung nach einem der Ansprüche 1 bis 6, **dadurch gekennzeichnet, dass** die Außenverbindungseinrichtung (22) mehrere erste Außenverbindungsstellen (26) und zweite Außenverbindungsstellen (28) zur Verbindung von den Außenblattfedern (22) aufweist.

8. Lamellenanordnung nach Anspruch 7, **dadurch gekennzeichnet, dass** die Außenblattfedern (24) der Außenverbindungseinrichtung (22) im Wesentlichen identisch zueinander ausgebildet und in Umfangsrichtung der Außenlamelle (18) gleichmäßig verteilt befestigt sind.

9. Verfahren zum Zusammenbau einer Lamellenanordnung nach einem der vorhergehenden Ansprüche, bei dem

mehrere Innenlamellen (12) bereitgestellt werden, die mit Innenblattfedern (46) und Innenverbindungsstellen (48) versehen sind,
mehrere Außenlamellen (18) bereitgestellt werden, die mit ersten Außenverbindungsstellen (26) und zweiten Außenverbindungsstellen (28) versehen sind,
wobei eine Anzahl von n Außenlamellen (18) und eine Anzahl von n-1 Innenlamellen (12) vorgesehen sind,
mehrere Außenblattfedern (24) bereitgestellt werden,
die Außenblattfedern (24) an den entsprechenden ersten Außenverbindungsstellen (26) der Außenlamellen (18) vormontiert werden,
die i-te Innenlamelle (12) auf der i-ten Außenlamelle (18) aufgelegt wird, wobei i ganzzahlig ist und $1 \leq i \leq n-2$,
die (i+1)-te Außenlamelle (18) auf der i-ten Innenlamelle (12) aufgelegt wird,
die an der i-ten Außenlamelle (18) vormontierten Außenblattfedern (24) an den entsprechenden zweiten Außenverbindungsstellen (28) der (i+1)-ten Außenlamelle (18) befestigt werden,
die (i+1)-te Innenlamelle (12) auf der (i+1)-ten Außenlamelle (18) aufgelegt wird,
die Innenblattfedern (46) der i-ten Innenlamelle (12) an den entsprechenden Innenverbindungsstellen (48) der (i+1)-ten Innenlamelle (12) befestigt werden,
die (i+2)-te Außenlamelle (18) auf der (i+1)-ten Innenlamelle (12) aufgelegt wird, und
die an der (i+1)-ten Außenlamelle (18) vormontierten Außenblattfedern (24) an den entsprechenden zweiten Außenverbindungsstellen (28) der (i+2)-ten Außenlamelle (18) befestigt werden.

## Claims

1. Multiple disc arrangement for a multiple plate clutch for coupling a drive shaft of a motor vehicle engine to at least one transmission input shaft of a motor vehicle transmission having

a plurality of annular inner discs (12) which are arranged parallel to one another,
an inner connecting device (14) which is arranged on an inner circumference (16) of the inner disc (12) in order to connect the inner discs (12) to one another,
a plurality of annular outer discs (18) which are arranged parallel to the inner discs (12) for pressing the inner discs (12) in a frictionally locking manner, and the inner discs (12) and the outer discs (18) being arranged such that they alternate and can be moved axially relative to one another, and
an outer connecting device (22) which is arranged on an outer circumference of the outer disc (18) for connecting the outer discs (18) to one another,
**characterised in that** the inner connecting device comprises a plurality of inner leaf springs (46) which are fastened to the inner discs (12),
the outer connecting device (22) comprises a plurality of outer leaf springs (24) which are fastened to the outer discs (18),
the torque transmitted into an outer disc (18) passing onto the next outer disc (18) via the outer leaf springs (24), and
the torque transmitted into an inner disc (12) passing onto the next inner disc (12) via the inner leaf springs (46).

2. Multiple disc arrangement according to Claim 1, **characterized in that** the inner disc (12) is provided with friction linings for transmitting the torque in a frictionally locking manner, the friction linings being arranged on both sides of the inner disc (12).

3. Multiple disc arrangement according to Claim 1, **characterized in that** the inner disc (12) itself is configured from a friction material.

4. Multiple disc arrangement according to one of Claims 1 to 3, **characterized in that** the inner connecting device (14) comprises a plurality of inner leaf springs (46) which are fastened to the inner disc (12) and a plurality of inner connecting points (48) for the connection of the inner leaf springs (46) of the closest inner disc (12).

5. Multiple disc arrangement according to Claim 4, **characterized in that** the inner leaf springs (46) of the inner connecting device (14) are of substantially identical configuration to one another and are distributed uniformly in the circumferential direction of the inner disc (12).

6. Multiple disc arrangement according to one of Claims 1 to 5, **characterized in that** the inner connecting device (14) is configured in one piece with the inner disc (12).

7. Multiple disc arrangement according to one of Claims 1 to 6, **characterized in that** the outer connecting device (22) has a plurality of outer leaf springs (24) and a plurality of first outer connecting points (26) and second outer connecting points (28) for the connection of the outer leaf springs (22).

8. Multiple disc arrangement according to Claim 7, **characterized in that** the outer leaf springs (24) of the outer connecting device (22) are of substantially identical configuration to one another and fastened in a uniformly distributed manner in the circumferential direction of the outer disc (18).

9. Method for assembling a multiple disc arrangement according to one of the preceding claims, in the case of which method

a plurality of inner discs (12) are provided which are provided with inner leaf springs (46) and inner connecting points (48),
a plurality of outer discs (18) are provided which are provided with first outer connecting points (28) and second outer connecting points (28),
a number of n outer discs (18) and a number of n-1 inner discs (12) being provided,
a plurality of outer leaf springs (24) being provided,
the outer leaf springs (24) being premounted on the corresponding first outer connecting points (26) of the outer discs (18),
the i-th inner disc (12) being placed on the i-th outer disc (18), i being an integer and $1 \leq i \leq n-2$,
the (i + 1)-th outer disc (18) being placed on the i-th inner disc (12), the outer leaf springs (24) which are premounted on the i-th outer disc (18) being fastened to the corresponding second outer connecting points (28) of the (i + 1)-th outer disc (18),
the (i + 1)-th inner disc (12) being placed on the (i + 1)-th outer disc (18),
the inner leaf springs (46) of the i-th inner disc (12) being fastened to the corresponding inner connecting points (48) of the (i + 1)-th inner disc (12),
the (i + 2)-th outer disc (18) being placed on the (i + 1)-th inner disc (12), and
the outer leaf springs (24) which are premounted on the (i + 1)-th outer disc (18) being fastened to the corresponding second outer connecting points (28) of the (i + 2)-th outer disc (18).

**Revendications**

1. Ensemble de disques pour un embrayage à disques multiples servant à l'accouplement d'un arbre d'entraînement d'un moteur de véhicule automobile à au moins un arbre d'entrée d'une boîte de vitesses de véhicule automobile, comprenant

plusieurs disques intérieurs (12) annulaires disposés parallèlement les uns aux autres,
un dispositif de liaison intérieur (14) disposé sur une périphérie intérieure (16) du disque intérieur (12) pour la liaison des disques intérieurs (12) les uns aux autres,
plusieurs disques extérieurs (18) annulaires disposés parallèlement aux disques intérieurs (12) pour presser par friction les disques intérieurs (12) et,
dans lequel les disques intérieurs (12) et les disques extérieurs (18) sont disposés de manière alternée et déplaçable axialement les uns par rapport aux autres, et
un dispositif de liaison extérieur (22) disposé sur une périphérie extérieure du disque extérieur (18) pour la liaison des disques extérieurs (18) les uns aux autres,
**caractérisé en ce que** le dispositif de liaison intérieur comporte plusieurs ressorts à lame intérieurs (46) fixés au disque intérieur (12),
le dispositif de liaison extérieur (22) comporte plusieurs ressorts à lame extérieurs (24) fixés au disque extérieur (18), dans lequel
le couple transmis dans un disque extérieur (18) est transmis par les ressorts à lame extérieurs (24) au disque extérieur (18) suivant, et
le couple transmis dans un disque intérieur (12) est transmis par les ressorts à lame intérieurs (46) au disque intérieur (12) suivant.

2. Ensemble de disques selon la revendication 1, **caractérisé en ce que** le disque intérieur (12) est doté de garnitures de friction pour la transmission du couple par friction, les garnitures de friction étant disposées sur les deux côtés du disque intérieur (12).

3. Ensemble de disques selon la revendication 1, **caractérisé en ce que** le disque intérieur (12) lui-même est réalisé à partir d'un matériau de friction.

4. Ensemble de disques selon l'une des revendications 1 à 3, **caractérisé en ce que** le dispositif de liaison intérieur (14) comporte plusieurs ressorts à lame intérieurs (46) fixés au disque intérieur (12) et plusieurs points de liaison intérieurs (48) pour la liaison des ressorts à lame intérieurs (46) du disque intérieur (12) le plus proche.

5. Ensemble de disques selon la revendication 4, **caractérisé en ce que** les ressorts à lame intérieurs (46) du dispositif de liaison intérieur (14) sont réalisés de manière sensiblement identique les uns aux autres et sont répartis uniformément dans la direction périphérique du disque intérieur (12).

6. Ensemble de disques selon l'une des revendications 1 à 5, **caractérisé en ce que** le dispositif de liaison intérieur (14) est réalisé d'un seul tenant avec le disque intérieur (12).

7. Ensemble de disques selon l'une des revendications 1 à 6, **caractérisé en ce que** le dispositif de liaison extérieur (22) comprend plusieurs ressorts à lame extérieurs (24) et plusieurs premiers points de liaison extérieurs (26) et deuxièmes points de liaison extérieurs (28) pour la liaison des ressorts à lame extérieurs (22).

8. Ensemble de disques selon la revendication 7, **caractérisé en ce que** les ressorts à lame extérieurs (24) du dispositif de liaison extérieur (22) sont réalisés de manière sensiblement identique les uns aux autres et sont fixés de manière répartie uniformément dans la direction périphérique du disque extérieur (18).

9. Procédé d'assemblage d'un ensemble de disques selon l'une des revendications précédentes, selon lequel

   plusieurs disques intérieurs (12) sont fournis, lesquels sont dotés de ressorts à lame intérieurs (46) et de points de liaison intérieurs (48), plusieurs disques extérieurs (18) sont fournis, lesquels sont dotés de premiers points de liaison extérieurs (26) et de deuxièmes points de liaison extérieurs (28), un nombre n de disques extérieurs (18) et un nombre n-1 de disques intérieurs (12) étant prévus, plusieurs ressorts à lame extérieurs (24) sont fournis, les ressorts à lame extérieurs (24) sont prémontés sur les premiers points de liaison extérieurs (26) correspondants des disques extérieurs (18),
le $i^{ème}$ disque intérieur (12) est appliqué sur le $i^{ème}$ disque extérieur (18), i étant un nombre entier et $1 \leq i \leq n-2$,
le $(i+1)^{ème}$ disque extérieur (18) est appliqué sur le $i^{ème}$ disque intérieur (12),
les ressorts à lame extérieurs (24) prémontés sur le $i^{ème}$ disque extérieur (18) sont fixés aux deuxièmes points de liaison extérieurs (28) correspondants du $(i+1)^{ème}$ disque extérieur (18),
le $(i+1)^{ème}$ disque intérieur (12) est appliqué sur le $(i+1)^{ème}$ disque extérieur (18),
les ressorts à lame intérieurs (46) du $i^{ème}$ disque intérieur (12) sont fixés aux points de liaison intérieurs (48) correspondants du $(i+1)^{ème}$ disque intérieur (12),
le $(i+2)^{ème}$ disque extérieur (18) est appliqué sur le $(i+1)^{ème}$ disque intérieur (12) et
les ressorts à lame extérieurs (24) prémontés sur le $(i+1)^{ème}$ disque extérieur (18) sont fixés aux deuxièmes points de liaison extérieurs (28) correspondants du $(i+2)^{ème}$ disque extérieur (18).

Fig. 1

Fig. 2

Fig. 3

Fig. 4

Fig. 5

Fig. 6

Fig. 7

Fig. 8

Fig. 9

Fig. 10

Fig. 11

$$n_{max} = \frac{2\pi}{s \cdot \varphi}$$

$$\varphi = 2 \cdot \arcsin\left(\frac{b}{d}\right)$$

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2002046632 A1
- DE 102013220265 A1

- US 20130213759 A1